**Europäisches Patentamt**

**European Patent Office**

**Office européen des brevets**

(19)

(11) Veröffentlichungsnummer: **0 087 099**

**A1**

(12) **EUROPÄISCHE PATENTANMELDUNG**

(21) Anmeldenummer: **83101396.6**

(22) Anmeldetag: **14.02.83**

(51) Int. Cl.³: **G 05 D 23/26**
**H 05 B 6/06**

(30) Priorität: **23.02.82 SE 8201122**

(43) Veröffentlichungstag der Anmeldung:
**31.08.83 Patentblatt 83/35**

(84) Benannte Vertragsstaaten:
**CH DE FR GB IT LI**

(71) Anmelder: **ASEA AB**

**S-721 83 Västeras(SE)**

(72) Erfinder: **Archenholtz, Ake, Ing.**
**Stalverksgatan 75**
**S-724 73 Västeras(SE)**

(72) Erfinder: **Bergman, Kjell, Dipl.-Ing.**
**Rustbodsgatan 14**
**S-724 81 Västeras(SE)**

(74) Vertreter: **Boecker, Joachim, Dr.-Ing.**
**Rathenauplatz 2-8**
**D-6000 Frankfurt a.M. 1(DE)**

(54) **Verfahren zur Temperaturregelung bei Induktoren für Rinnenöfen.**

(57) Die Erfindung betrifft ein Verfahren zur Temperaturregelung in Induktoren für Rinnenöfen für Eisen oder Stahl. Das Verfahren ist dadurch gekennzeichnet, daß der vom Induktor aufgenommene Strom (I) oder die aufgenommene Leistung (P) gemessen wird und das Meßsignal (I bzw. P) mit einem Sollwert ($I_s$ bzw. $P_s$) für den Strom bzw. die Leistung in einer Regelanordnung) verglichen wird und daß die Stromzufuhr bzw. Leistungszufuhr vom Induktor abgeschaltet oder vermindert wird, wenn $I > I_s$ bzw. $P > P_s$, wobei $I_s$ oder $P_s$ so gewählt ist, daß bei diesem Wert die Temperatur des Eisens oder Stahls in der Rinne nahe beim Curiepunkt liegt. In Fällen, in denen der Induktor von einer Thyristorspeiseanordnung gespeist wird, kann die Regelung auch in der Weise erfolgen, daß im Induktorkreis eine konstante Impedanz aufrechterhalten wird, die den Verhältnissen im Curiepunkt entspricht.

FIG. 1

EP 0 087 099 A1

Patentanwalt und Rechtsanwalt
Dr.-Ing. Dipl.-Ing. Joachim B o e c k e r

6 Frankfurt / Main 1 , 25.1.1983
Rathenauplatz 2 - 8
Telefon: (06 11) * 28 23 55
Telex: 4 189 066 itax d

**0087099**

21 235 PE

A S E A    Aktiebolag

Västeras/Schweden

Verfahren zur Temperaturregelung bei Induktoren für Rinnenöfen

Die Erfindung betrifft ein Verfahren zur Temperaturregelung bei Induktoren für Rinnenöfen gemäß dem Oberbegriff des Anspruches 1.

Auf bestimmten Gebieten werden Rinneninduktoren zur kontinuierlichen Überhitzung von Eisen und Stahl verwendet, das/der beispielsweise in einer Rinne vorbeifließt. Nachdem eine solche Überhitzung eine Zeit lang, z.B. während einer oder zweier Schichten, stattgefunden hat, kann es mit Rücksicht auf die Energieersparnis vorteilhaft sein, den Induktor abzustellen und auf Raumtemperatur abkühlen zu lassen. Ein Nachteil dieses Verfahrens besteht darin, daß es zu Rissen im Auskleidungsmaterial führen kann. Bedeutend günstiger ist es, wenn das Auskleidungsmaterial auf einer Temperatur von 700 bis 800°C gehalten werden kann, was jedoch dadurch erschwert wird, daß man nach dem Stande der Technik hierfür ein Thermoelement benötigt, das in diesem Zusammenhang nur schwer anzubringen ist und wenig betriebssicher ist.

Der Erfindung liegt die Aufgabe zugrunde, ein Verfahren der eingangs genannten Art zu entwickeln, bei dem auf die Verwendung eines Thermoelementes zur Aufrechterhaltung einer geeigneten Temperatur für das Auskleidungsmaterial verzichtet werden kann.

Zur Lösung dieser Aufgabe wird ein Verfahren nach dem Oberbegriff des Anspruches 1 vorgeschlagen, welches erfindungsgemäß die im kennzeichnenden Teil des Anspruches 1 genannten Merkmale hat.

Vorteilhafte Weiterbildungen der Erfindung sind in den Unteransprüchen genannt.

Das Verfahren gemäß der Erfindung ermöglicht es also, das Eisen oder den Stahl in der Rinne zu lassen, ohne daß die Gefahr einer Rißbildung für das Auskleidungsmaterial besteht und ohne daß ein Thermoelement für die Aufrechterhaltung einer gewissen Temperatur erforderlich ist. Im Vergleich zu Eisen im festen Zustand bei Raumtemperatur hat das Eisen bei der aufrechterhaltenen Temperatur eine geringere Festigkeit und eine größere Dehnung. Die Erfindung macht von der Tatsache Gebrauch, daß bei der Leistungszufuhr bei gegebener Spannung die Stromstärke des Induktors (wie auch die Leistung) beim Übergang von magnetischem zu unmagnetischem Material in der Rinne (also beim Curiepunkt) schnell ansteigt. Der Wirkstrom bei konstanter Spannung kann sich mehr als verdoppeln, wenn die Temperatur des Eisens den Curiepunkt nach oben hin passiert. Diesen kräftigen Sprung im Strom bzw. in der Leistung verwendet die Erfindung dazu, die Leistung so zu steuern, daß die Temperatur in der Rinne etwa auf dem Curiepunkt gehalten wird. Auf diese Weise kann ein für den Induktor günstiger Betriebszustand aufrechtgehalten werden, und gleichzeitig können die Energieverluste stark reduziert werden.

Anhand der Figuren soll die Erfindung näher erläutert werden. Es zeigen:

Fig. 1 den Zusammenhang zwischen den elektrischen Größen und der Temperatur in der Rinne eines Induktors,

Fig. 2, 3 und 4 Beispiele für Regelanordnungen, die nach dem Verfahren gemäß der Erfindung arbeiten.

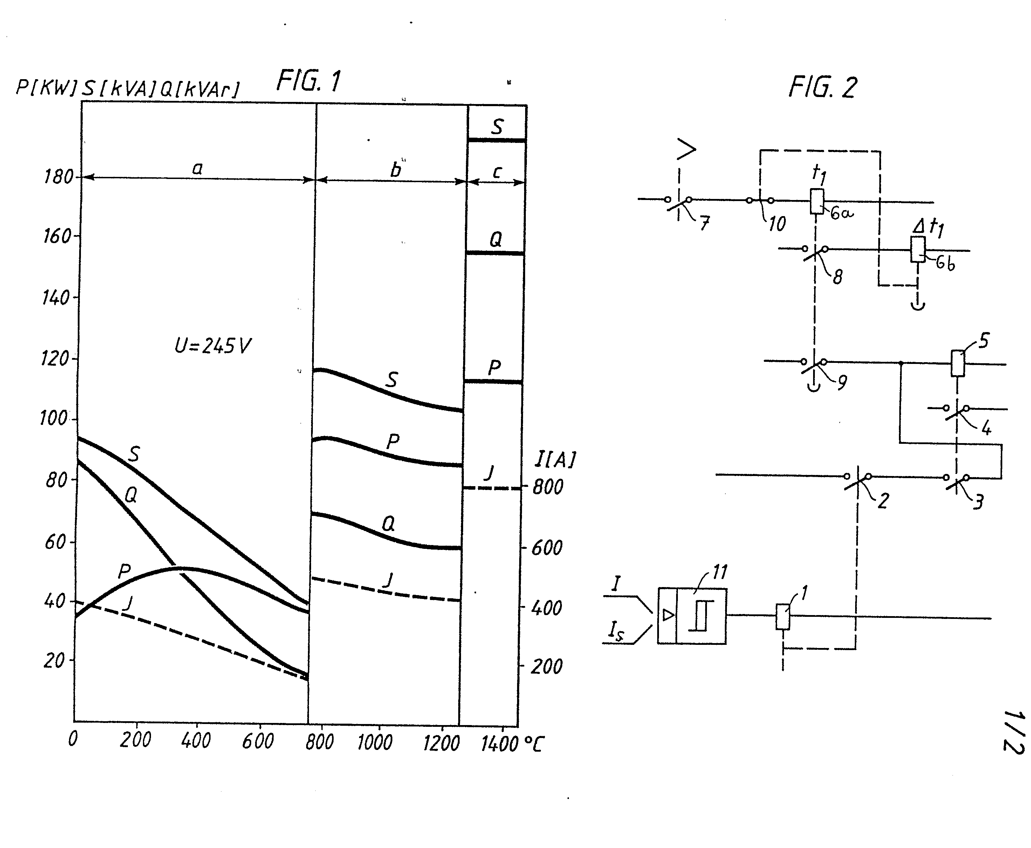

Figur 1 zeigt die Abhängigkeit der Scheinleistung (S), der Wirkleistung (P), der Blindleistung (Q) und der Stromstärke (I) des Rinneninduktors von der Temperatur in der Rinne beim Hochfahren des Induktors. Auf der Ordinate sind P (kW), S (kVA), Q (kVAr) und I (A) aufgetragen, letzterer mit Skala rechts in Figur 1. Im Temperaturbereich a ist der Inhalt der Rinne magnetisch. Beim Übergang zum Temperaturbereich b wird der Curiepunkt (ca.775$^o$C) passiert, wobei der Inhalt der Rinne unmagnetisch wird. I,P,Q und S steigen bei diesem Übergang schnell an, und diese Erscheinung wird von der Erfindung ausgenutzt.Beim Übergang zum Temperaturbereich c (geschmolzener Zustand)steigen I,P,Q und S noch weiter an. In dem Beispiel beträgt die Speisespannung U konstant 245 V.

Die Ausnutzung des Curiepunktes zur Temperaturregelung bei Induktoren zeigt Figur 2 anhand eines Beispiels für eine Regelschaltung.Das Relais 1 mit dem Arbeitskontakt 2 spricht an, wenn $I < I_s$ bzw. $P < P_s$ ist,wobei $I_s$ bzw. $P_s$ Bezugswerte oder Sollwerte sind, die so gewählt sind, daß sie größer sind als die im Temperaturbereich a auftretenden Werte von I bzw. P. Wenn das Relais 1 anspricht, schließt der Schalter 2. Der Schalter 4 liegt im Speisekreis des Induktors. Über den Schalter 7 wird die Betätigungsspannung für die Steuerschaltung eingeschaltet. Das Relais 5 schließt den Schalter 4, wenn der Schalter 9 geschlossen wird. Dieser wird in gleichmäßigen Zeitintervallen $t_1 + \Delta t_1$ kurzfristig geschlossen, was durch die Verzögerungsrelais 6a und 6b bewirkt wird: Wenn der Schalter 7 geschlossen wird, zieht das Relais 6a nach der Zeit $t_1$ an, wodurch der Schalter 9 geschlossen wird. Gleichzeitig erhält das Relais 6b über den Schalter 8 Spannung und zieht nach seiner Verzögerungszeit $\Delta t_1$ ebenfalls an. Dabei wird der Ruhekontakt 10 geöffnet, so daß das Relais 6a abfällt und der Schalter 9 öffnet. Daran schließt sich der eben beschriebene Zyklus erneut an. Wenn beim Schließen des Schalters 9 $I < I_s$ bzw. $P < P_s$, also der Schalter 2 geschlossen ist, dann hält sich das Relais 5 über seinen Hilfskontakt 3 selbst, und die Leistungszufuhr zum Induktor

/4

- 4 -

wird erst unterbrochen, wenn $I \geq I_s$ bzw. $P \geq P_s$ wird, d.h., die Temperatur den Curiepunkt passiert. Dann fällt das Relais 1 ab und der Kontakt 2 öffnet, so daß auch das Relais 5 abfällt. Wenn im Augenblick des Schließens des Schalters 4 $I > I_s$ bzw. $P > P_s$, dann bleibt der Schalter 4 nur während der Zeitspanne $\Delta t_1$ geschlossen.

Die Leistungszufuhr zum Induktor wird also unterbrochen nach der Zeit $\Delta t_1$, wenn $I > I_s$ ($P > P_s$), oder in dem Zeitpunkt, in dem der Übergang von $I \leq I_s$ nach $I > I_s$ bzw. $P \leq P_s$ nach $P > P_s$ stattfindet.

Das gemessene I- bzw. P-Signal wird dem Steuerglied 11 zugeführt, wo es mit dem Wert $I_s$ bzw. $P_s$ verglichen wird.

Die vorzugsweise verstellbaren Verzögerungszeiten können für $t_1$ 0 bis 10 Minuten und für $\Delta t_1$ 0 bis 60 Sekunden betragen. Die Regelung erfolgt bei einer geeigneten festen Spannung. Wenn jedoch eine solche nicht zur Verfügung steht, ist es auch möglich, die Regelung mit verschiedenen Spannungen am speisenden Transformator vorzunehmen.

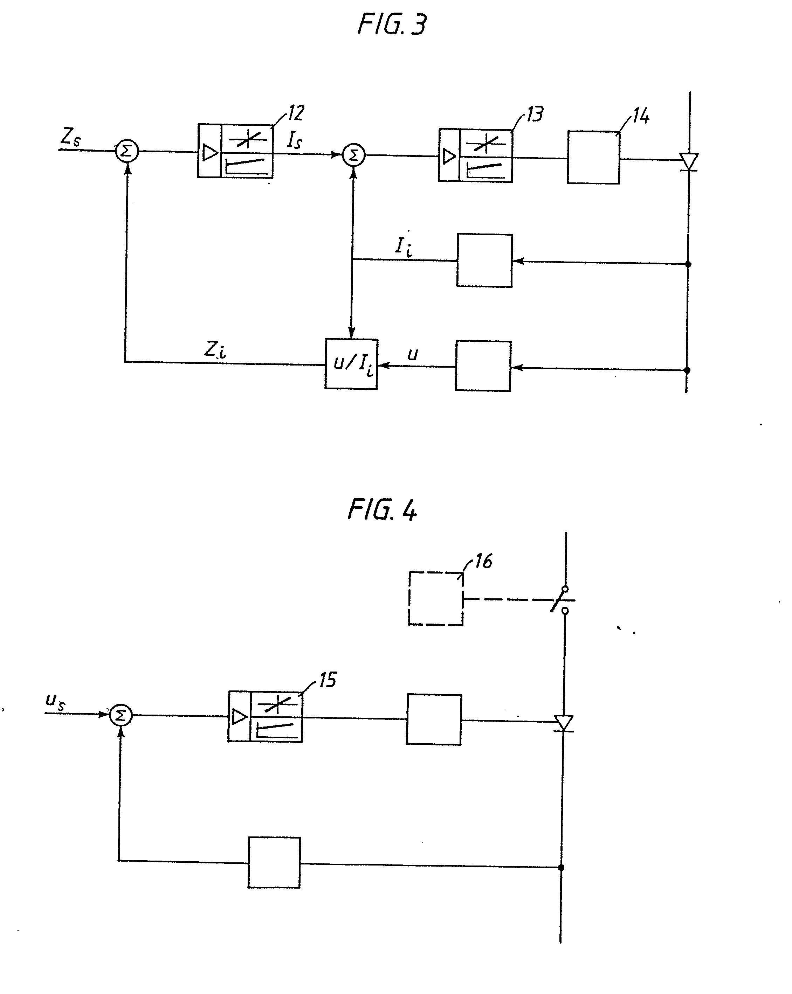

In den Fällen, in denen der Induktor von einer Thyristorspeiseanordnung mitgespeist wird, kann die Regelanordnung auch so aufgebaut werden, daß im Induktorkreis eine konstante Impedanz aufrechterhalten wird. Eine solche Anordnung zeigt Figur 3.

In diesem Falle werden der Induktorstrom und die Induktorspannung gemessen, und aus diesen Meßwerten wird ein Impedanzistwert $Z_i$ berechnet. Dieser wird mit einem Impedanzsollwert $Z_s$ verglichen, und der Differenzwert wird einem Regler 12 zugeführt, dessen Ausgangswert den Bezugswert oder Sollwert $I_s$ für den Stromregler 13 des Thyristorspeisegliedes darstellt. Der Impedanzsollwert wird so gewählt, daß er den Verhältnissen in dem Temperaturbereich

- 5 -

entspricht, in welchem das in der Rinne befindliche Material vom magnetischen Zustand in den unmagnetischen Zustand übergeht. 14 bezeichnet das Steuerimpulsglied der Thyristorspeiseanordnung.

Eine andere Möglichkeit für das erfindungsgemäße Verfahren bei einem thyristorgespeisten Induktor besteht darin, auf konstante Induktorspannung U zu regeln. Das Einschalten der Leistung erfolgt dabei in gewissen Zeitintervallen $(t_1 + \Delta t_1)$, und das Ausschalten der Leistung erfolgt entsprechend den oben genannten Bedingungen $(I > I_s)$ (Fig. 4). Der Spannungsregler ist mit 15 bezeichnet, und 16 bezeichnet die Betätigungseinrichtung für den Hauptschalter des Induktorkreises.

Das obenbeschriebene Verfahren kann im Rahmen des offenbarten allgemeinen Erfindungsgedankens in vielfacher Weise variiert werden.

Patentanwalt und Rechtsanwalt
Dr.-Ing. Dipl.-Ing. Joachim Boecker

- 6 -

**0087099**

6 Frankfurt/Main 1 , 25.1.1983
Rathenauplatz 2-8     B/d 21 235 PE
Telefon: (0611) *28 23 55
Telex: 4 189 066 itax d

## PATENTANSPRÜCHE:

1. Verfahren zur Temperaturregelung bei Induktoren für Rinnenöfen für Eisen oder Stahl, dadurch gekennzeichnet, daß der vom Induktor aufgenommene Strom (I) oder die aufgenommene Leistung (P) gemessen wird und das Meßsignal (I bzw. P) mit einem Sollwert ($I_s$ bzw. $P_s$) für den Strom bzw. die Leistung in einer Regelanordnung verglichen wird und daß die Stromzufuhr bzw. Leistungszufuhr zum Induktor abgeschaltet oder vermindert wird, wenn $I > I_s$ bzw. $P > P_s$, wobei $I_s$ oder $P_s$ so gewählt ist, daß bei diesem Wert die Temperatur des Eisens oder Stahls in der Rinne nahe beim Curiepunkt liegt.

2. Verfahren nach Anspruch 1, dadurch gekennzeichnet, daß das Ein- oder Ausschalten der Leistung mit einer gewissen Zeitverzögerung erfolgt.

3. Verfahren nach Anspruch 1 oder 2, dadurch gekennzeichnet, daß das Einschalten der Leistung in gewissen Zeitintervallen $t_1 + \Delta t_1$ erfolgt.

4. Verfahren nach Anspruch 1, dadurch gekennzeichnet, daß die Regelung so erfolgt, daß im Induktorkreis eine vorgegebene konstante Impedanz aufrechtgehalten wird.

5. Verfahren nach Anspruch 4, bei dem der Induktor über eine Thyristorspeiseanordnung gespeist wird, dadurch gekennzeichnet, daß die Spannung und der Strom zur Bildung des Impedanzistwerts $Z_i = U/I_i$ gemessen werden und daß dieser Impedanzistwert mit einem Impedanzsollwert $Z_s$ verglichen wird, wobei die Differenz in einem Regler verarbeitet wird, dessen Ausgangssignal der Sollwert ($I_s$) für den Stromregler der Thyristorspeiseanordnung ist.

/7

6. Verfahren nach Anspruch 3, bei dem der Induktor über eine Thyristorspeiseanordnung gespeist wird, dadurch gekennzeichnet, daß die Thyristorspeiseanordnung für konstante Spannungsregelung eingestellt wird und daß das Einschalten der Leistung in gewissen Zeitintervallen erfolgt.

FIG. 1

FIG. 2

FIG. 3

FIG. 4

21 235 PE

0087099

2/2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 748 241 (G. MOHR) <br> * Spalte 1, Zeilen 45-59; Spalte 3, Zeilen 13-61; Abbildung 1 * | 1 | G 05 D 23/26 <br> H 05 B 6/06 |
| | --- | | |
| A | FR-A-2 417 736 (ASEA) <br> * Seite 1, Zeile 32 - Seite 2, Zeile 5; Seite 2, Zeilen 22-28 * | 1,5 | |
| | --- | | |
| A | CH-A- 495 102 (SIEMENS) <br> * Spalte 1, Zeile 31 - Spalte 4, Zeile 3; Abbildungen 1,2 * | 1,5 | |
| | --- | | |
| A | DE-B-1 192 789 (BROWN-BOVERI) <br> * Spalte 4, Zeilen 38-53 * | 6 | |
| | ----- | | |

|  |
|---|
| RECHERCHIERTE SACHGEBIETE (Int. Cl. ³) |
| G 05 D <br> H 05 B |

Der vorliegende Recherchenbericht wurde für alle Patentansprüche erstellt.

| Recherchenort <br> DEN HAAG | Abschlußdatum der Recherche <br> 31-05-1983 | Prüfer <br> HELOT H.V. |
|---|---|---|